(19) Europäisches Patentamt
European Patent Office
Office européen des brevets

(11) Veröffentlichungsnummer: **0 317 742 B1**

(12) # EUROPÄISCHE PATENTSCHRIFT

(45) Veröffentlichungstag der Patentschrift: **23.12.92**

(51) Int. Cl.[5]: **C08G 18/80**, C08G 18/42, C09D 175/04

(21) Anmeldenummer: **88116316.6**

(22) Anmeldetag: **03.10.88**

Die Akte enthält technische Angaben, die nach dem Eingang der Anmeldung eingereicht wurden und die nicht in dieser Patentschrift enthalten sind.

(54) **Verfahren zur Herstellung von Einkomponenten-PUR-Einbrennlacken.**

(30) Priorität: **21.11.87 DE 3739478**

(43) Veröffentlichungstag der Anmeldung:
**31.05.89 Patentblatt 89/22**

(45) Bekanntmachung des Hinweises auf die Patenterteilung:
**23.12.92 Patentblatt 92/52**

(84) Benannte Vertragsstaaten:
**AT BE CH DE ES FR GB IT LI NL SE**

(56) Entgegenhaltungen:
**EP-A- 0 010 248**
**EP-A- 0 023 626**
**DE-A- 2 020 905**
**FR-A- 1 043 008**
**FR-A- 1 233 866**
**FR-A- 2 120 124**
**US-A- 3 926 875**

(73) Patentinhaber: **HÜLS AKTIENGESELLSCHAFT**
**Patentabteilung / PB 15 - Postfach 13 20**
**W-4370 Marl 1(DE)**

(72) Erfinder: **Gras, Rainer, Dr.**
**Im Ostholz 49 a**
**W-4630 Bochum 5(DE)**

EP 0 317 742 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft lösungsmittelhaltige Einkomponenten-Polyurethan-Einbrennlacke, bestehend aus mit an sich bekannten Blockierungsmitteln partiell blockierten Polyisocyanaten und hydroxylgruppenhaltigen Polyestern auf der Basis von überwiegend aromatischen Dicarbonsäuren, Diolen und Triolen sowie gegebenenfalls üblichen Zuschlagsstoffen.

Zur Herstellung von bei Raumtemperatur haltbaren Mischungen aus Polyisocyanat und Polyoxyverbindungen verwendet man bekanntlich Polyisocyanate, deren reaktionsfähige Gruppen durch Umsetzung mit monofunktionellen Verbindungen verschlossen sind und die allgemein als verkappte oder blockierte Polyisocyanate bezeichnet werden. Derartige Produkte werden beispielsweise in den Annalen Band 562 (1949), Seiten 205 bis 229, beschrieben.

Durch Einwirkung höherer Temperaturen spalten sie wiederum in ihre Ausgangskomponenten zurück, wobei die nun freiwerdenden Isocyanatgruppen ihrerseits mit den in der Reaktionsmischung vorliegenden Hydroxylgruppen der Polyoxyverbindungen unter Filmbildung reagieren können.

Sollen diese Mischungen aus blockierten Polyisocyanaten und Polyoxyverbindungen zur Beschichtung von Gegenständen im Spritz- und Gießverfahren sowie zur Beschichtung von Blechen mit Hilfe der Walzenlackierung, speziell nach dem Coil-Coating-Verfahren, appliziert werden, müssen sowohl der Vernetzer als auch das Harz in den üblichen Lacklösungsmitteln löslich und lagerstabil sein.

Mit nur wenigen Ausnahmen sind mit Epsilon-Caprolactam und/oder Ketoximen blockierte aliphatische Polyisocyanate in den lacküblichen Lösemitteln unverträglich, (DE-AS 23 46 818, Spalte 2, Zeile 18). Sie scheiden daher als Ausgangskomponente für die Herstellung von Einkomponenten-PUR-Einbrennlacken aus.

Des weiteren wird in der DE-AS 23 46 818, Spalte 2, Zeile 45, als vorteilhaft beschrieben, wenn 0,01 bis 5 Gew.-% freie Isocyanatgruppen in dem blockierten Isocyanataddukt zugelassen werden. In der DE-OS 33 22 722 werden in dem blockierten Isocyanataddukt bis zu 10, vorzugsweise bis zu 5 Gew.-%, freie Isocyanatgruppen zugelassen. Diese obere Grenze an freien Isocyanatgruppen in einem blockierten Isocyanataddukt war aus Viskositätsgründen bzw. Neigung zum Gelieren bisher nicht zu überschreiten, um die Verarbeitbarkeit der Einkomponenten-PUR-Einbrennlacke zu gewährleisten. Ein möglichst hoher freier Isocyanatgruppengehalt wäre aus mancherlei Gründen wünschenswert, d. h. aus ökonomischen und besonders ökologischen Erwägungen sowie im Hinblick auf eine hervorragende Verträglichkeit der Bindemittelkomponenten im Lacklösungsmittel verbunden mit erhöhter Lagerstabilität.

Schließlich werden gemäß DE-AS 20 20 905 lösemittelhaltige 1-K-Einbrennlacke beschrieben, die als Härter monoblockierte Diisocyanate enthalten. Letztere werden hergestellt, indem man 1 bis 3 Mol Diisocyanat pro Mol Blockierungsmittel umsetzt und nicht umgesetztes Diisocyanat mit Hexan extrahiert. Nachteilig ist bei diesem Verfahren, daß dabei ein hoher Anteil an monomerem Diisocyanat resultiert, was zwangsläufig zu einem höheren Anteil an diblockiertem Diisocyanat führt. Die Viskositäten der Endprodukte - also der nach Umsatz der blockierten Diisocyanate mit der Polyolkomponente entstehenden Produkte - sind für die Praxis viel zu hoch.

Ziel der Erfindung war es, zur Herstellung eines Einkomponenten-PUR-Einbrennlacksystems ein halblockiertes Polyisocyanat als Vernetzer für hydroxylgruppenhaltige Polyoxyverbindungen zu verwenden. Das bedeutet, daß pro Mol Polyisocyanat nur 1 Mol Blockierungmittel zur Reaktion gebracht wird. Dadurch erhöht sich der Gehalt an freien Isocyanatgruppen im blokkierten Polyisocyanataddukt auf > 10 Gew.-%. Aufgrund dieser Verfahrensweise werden die ökonomischen und ökologischen Voraussetzungen erheblich verbessert:

a) Die Menge des emittierenden Blockierungsmittels wird im Vergleich zu den Einkomponenten-PUR-Einbrennlacken des Standes der Technik reduziert.

b) Die Menge des Vernetzers - bezogen auf die identische Hydroxylzahl der Polyoxyverbindung und das identische NCO/OH-Verhältnis - zur Herstellung der Lack-Stammlösung kann gesenkt werden.

c) Die Möglichkeit der Bildung von monomerem Polyisocyanat während des Härtungsprozesses ist im Vergleich zum Stand der Technik weitgehend eliminiert.

d) Das Trockenfilmgewicht auf dem beschichteten Substrat wird erhöht.

Es war bisher unmöglich, Einkomponenten-PUR-Einbrennlacke mit in praxi relevanten Verarbeitungsviskositäten herzustellen, wenn die halbblokkierten Polyisocyanataddukte gemäß der Reaktionsgleichung

$$B + OCN - R - NCO \not\longrightarrow B - OC - NH - R - NCO$$

B = Blockierungsmittel

hergestellt wurden. Bei der Reaktion von 1 Mol Blockierungsmittel mit 1 Mol Diisocyanat bildet sich unter Erhalt von 15 bis 17 Gew.-% nicht umgesetztem, also unblockiertem monomerem Polyisocyanat vollständig blokkiertes Polyisocyanat. Dieser hohe Monomergehalt stellt einen so schwerwiegenden Nachteil dar, daß man auf diese Weise Einkomponenten-PUR-Einbrennlacke für die Praxis gemäß dem Stand der Technik nicht realisieren kann.

Überraschenderweise ist es nun gelungen, auf Basis halbblockierter Polyisocyanate mit einem freien Isocyanatgehalt im blockierten PolyisocyanatAddukt von > 10 Gew.-% und einem Polyisocyanat-Monomergehalt ≦ 3,5, vorzugsweise ≦ 2,5 und ganz besonders bevorzugt von ≦ 1 Gew.-% in Kombination mit hydroxylgruppenhaltigen Polyoxyverbindungen mit mehr als zwei OH-Gruppen im Molekül Einkomponenten-PUR-Einbrennlacke herzustellen.

Die Herstellung dieser partiell blockierten Polyisocyanate ist Gegenstand einer gesonderten Patentanmeldung und erfolgt dadurch, daß man das Polyisocyanat in großem Überschuß - 5 bis 20 Mol - mit dem Blockierungsmittel - 1 Mol - bei Temperaturen von 50 bis 130 °C, vorzugsweise 70 bis 100 °C, zur Reaktion bringt und anschließend das überschüssige Polyisocyanat durch Dünnschichtdestillation abtrennt. Das Polyisocyanat soll dabei einen Siedepunkt im Vakuum unterhalb der Deblockierungstemperatur des eingesetzten Blockierungsmittels besitzen. Das Blockierungsmittel wird dem überschüssigen Polyisocyanat zugesetzt.

Gegenstand der Erfindung ist daher ein Verfahren zur Herstellung von Einkomponenten-PUR-Einbrennlacken auf der Basis von hydroxylgruppenhaltigen Polyoxyverbindungen und Polyisocyanataddukten sowie üblichen Zuschlagstoffen in lacküblichen Lösemitteln, dadurch gekennzeichnet, daß A halbblockierte aliphatische und/oder (cyclo)aliphatische Polyisocyanate mit B hydroxylgruppenhaltigen Polyoxyverbindungen mit mehr als zwei OH-Gruppen im Molekül umgesetzt werden, wobei das halbblockierte Polyisocyanat durch Zugabe des Blockierungsmittels zu der 5- bis 20fach molaren Menge an Polyisocyanat erhalten wurde, das Polyisocyanat einen Siedepunkt im Vakuum unterhalb der Deblockierungstemperatur des Blockierungsmittels besitzt, das halbblockierte Polyisocyanat weitgehend mittels Dünnschichtdestillation vom monomeren unblockierten Polyisocyanat befreit wurde und der Anteil an monomerem unblockiertem Polyisocyanat bis = 3,5 Gew.-%, vorzugsweise = 2,5 und besonders bevorzugt = 1 Gew.-%, betragen kann.

Die erfindungsgemäß zu verwendenden halbblockierten Polyisocyanate können in der Regel bevorzugt aus den technisch leicht zugänglichen Polyisocyanaten, die aliphatischer und/oder (cyclo)aliphatischer Natur sein können, wie Hexamethylendiisocyanat-1.6 (HDI), 2-Methylpentandiisocyanat-1.5(DI51), 2.2.4(2.4.4)-Trimethylhexamethylendiisocyanat-1.6 (TMDI) und ganz bevorzugt aus dem 3-Isocyanatomethyl-3.5.5-trimethylcyclohexylisocyanat (IPDI) und deren Isomerengemischen hergestellt werden.

Als Blockierungsmittel kommen solche infrage, die bei Härtungstemperaturen, d. h. zwischen 130 und 350 °C, vorzugsweise zwischen 140 und 300 °C respalten. Dazu werden Alkohole, z. B. Methanol, Ethanol, Isopropanol, Cyclohexanol, Oxime, wie Acetonoxim, Methylisobutylketoxim, Diisobutylketoxim, Mercaptane, Lactame, z. B. Lauryllactam, sterisch gehinderte sekundäre Amine, z. B. Diisopropylamin, Dicyclohexylamin, Acetessigester, Malonsäureester und insbesondere Epsilon-Caprolactam und Methylethylketoxim gezählt (vgl. "Methoden der organischen Chemie" Houben-Weyl, Bd. 14/2, 4. Aufl., Georg Thieme Verlag, Stuttgart, 1963, S. 61 ff.).

Zur erfindungsgemäßen Herstellung der Einkomponenten-PUR-Einbrennlacke können auch Gemische der halbblockierten Polyisocyanate als Vernetzer für die hydroxylgruppenhaltigen Polyoxyverbindungen eingesetzt werden.

Die erfindungsgemäß zu verwendenden hydroxylgruppenhaltigen Polyoxyverbindungen sind vorzugsweise gesättigte Polyester auf der Basis aliphatischer und aromatischer Polycarbonsäuren, Diolen und Triolen mit Hydroxylzahlen von 50 bis 400 mg KOH/g, vorzugsweise von 80 bis 330 mg KOH/g, und Molekulargewichten von 400 bis 4 500, vorzugsweise von 500 bis 2 500, und deren Glasumwandlungspunkt unterhalb + 20 °C liegt. Wesentliche Bestandteile der Polyester sind: cyclische Polycarbonsäuren und ihre Ester und Anhydride, z. B. Phthal-, Isophthal- und Terephthalsäure, Benzoltricarbonsäuren, Trimellitsäureanhydrid, Dimethylterephthalat (DMT) und ihre Hydrierungsprodukte; Diole, z. B. Ethylenglykol, 1.2- oder 1.3-Propandiol, 1.2- oder 1.3- oder 1.4-Butandiol, Pentandiol-1.5, 2-Methylpentandiol-1.5, Hexandiol-1.6, Cyclohexandiol, 4,4'-Dihydroxydicyclohexylpropan-2.2, 1.4-Dihydroxymethylcyclohexan, Diethylenglykol, Triethylenglykol, Hydroxypivalinsäureneopentylglykolester oder Neopentylglykol; Polyole wie Glyzerin, Hexantriol, Trimethylolpropan (TMP), Trimethylolethan, Pentaerythrit.

Ganz oder anteilmäßig können auch acyclische Polycarbonsäuren wie Adipin-, 2.2.4(2.4.4)-Trimethyladipin-, Sebacin-, Kork- oder Dodecandicarbonsäure enthalten sein. Anteilmäßig können die Polyester auch monofunktionelle Carbonsäuren wie Benzoesäure enhalten.

Auch Mono- und Polyester aus Lactonen, z. B. Epsilon-Caprolacton, Valerolacton oder Hydroxycarbonsäuren, wie Hydroxypivalinsäure, Omega-Hydroxydecansäure, Omega-Hydroxycapronsäure, Thioglykolsäure können eingesetzt werden, Polyester aus den obengenannten Polycarbonsäuren bzw. deren Derivate und Polyphenolen wie Hydrochinon, Bisphenol-A oder Bis-(4-hydroxyphenyl)-sulfon; Polyester der Kohlensäure, die aus Hydrochinon, Diphenylpropan, p-Xylylenglykol, Ethylenglykol, Butandiol oder Hexandiol und anderen Polyolen durch übliche Kondensationsreaktion, z. B. mit Phosgen oder Diethyl- bzw. Diphenylcarbonat oder aus cyclischen Carbonaten wie Glykolcarbonat oder Vinylidencarbonat, durch Polymerisation in bekannter Weise erhältlich sind.

Die Polyester können auf an sich bekannte Weise durch Kondensation oder Umesterung, gegebenenfalls in Gegenwart üblicher Katalysatoren, in einer Inertgasatmosphäre bei Temperaturen von 100 bis 260 °C, vorzugsweise von 130 bis 230 °C, in der Schmelze oder in azeotroper Fahrweise hergestellt werden, wie es z. B. in "Methoden der Organischen Chemie", Houben-Weyl, Bd. 14/2, 1-5, 21-23, 40-44, Georg Thieme Verlag, Stuttgart, 1963 oder bei C. R. Marten, Alkyd Resins, 51-59, Reinhold Plastics Appl. Series, Reinhold Publishing Comp., New York, 1961, beschrieben ist.

Ebenso können aber auch hydroxylgruppenhaltige Acrylatharze, Polyurethan- und/oder Polyharnstoffe eingesetzt werden.

Zur erfindungsgemäßen Herstellung der Einkomponenten-PUR-Einbrennlacke werden die Komponenten A und B in lacküblichen Lösemitteln gelöst. Das Mischungsverhältnis der Bindemittelkomponente läßt sich in weiten Grenzen verändern. Die besten lacktechnischen Kenndaten werden erzielt, wenn das Bindemittelgemisch aus 50 bis 90 Gew.-% des Polyesters und aus 50 bis 10 Gew.-% des Vernetzers besteht, wobei das OH/NCO-Verhältnis von 1 : 0,6 bis 1,2, vorzugsweise 1 : 0,8 bis 1,1 variiert werden kann. Besonders bevorzugt ist, pro OH-Äquivalent der Polyhydroxylverbindung ein Äquivalent NCO des Vernetzers zu verwenden. Die Konzentration des Harz(Polyester)/Vernetzer(Härter)-Gemisches (Bindemittel) im Lösemittel liegt zwischen 40 und 80 Gew.-%.

Für die erfindungsgemäßen Einkomponenten-Einbrennlacke geeignete Lösemittel sind solche, deren unterer Siedepunkt bei etwa 100 °C liegt. Die obere Grenze des Siedepunktes des Lösemittels ist von den jeweiligen Einbrennbedingungen abhängig. Wenn man bei höheren Temperaturen einbrennt, müssen auch die Siedepunkte der zu verwendenden Lösemittel bei höheren Temperaturen liegen. Als Lösemittel kommen unter anderem folgende infrage:
Kohlenwasserstoffe, wie z. B. Toluol, Xylol, SOLVESSOR 100, 150 und 200 (Aromatengemische der Fa. Esso), Tetralin, Decalin, Ester, wie z. B. Essigsäurebutylester, Essigsäure-n-hexylester, Ethylenglykolacetat (EGA), Butylglykolacetat, Methoxypropylacetat (MOP-A) usw., Ketone, wie z. B. Methylisobutylketon, Diisobutylketon, Isophoron. Die genannten Lösemittel können auch als Gemische eingesetzt werden.

Zur erfindungsgemäßen Herstellung der Einkomponenten-PUR-Einbrennlacke werden die Bindemittelkomponenten A und B, gelöst im lacküblichen Lösemittel, bei 50 bis 100 °C, vorzugsweise zwischen 60 und 80 °C, gegebenenfalls in Anwesenheit der in der PUR-Chemie üblichen Katalysatoren, z. B. in Mengen von 0,05 bis 1,5 Gew-% zur Reaktion gebracht. Die Lacklösung wird solange erhitzt, bis der NCO-Gehalt auf Null gesunken ist.

Nach erfolgter Umsetzung der OH- und NCO-Gruppen können der Lacklösung auch die üblichen Zuschlagstoffe wie Pigmente, Farbstoffe, Füllstoffe, Verlaufmittel, Glanzverbesserer, Entschäumer, Netzmittel und Stabilisatoren z. B. in Mengen bis zu 50 Gew-% zugesetzt werden. In Sand- oder Kugelrührwerksmühlen werden diese Zuschlagsstoffe abgerieben.

Die Einkomponenten-PUR-Einbrennlacke eignen sich insbesondere für die Applikation auf Metalloberflächen, aber auch auf Gegenständen aus anderen Materialien wie Glas oder Kunststoff. Die erfindungsgemäßen Lacke finden vor allem Anwendung in der Coil-Coating-Lackierung für witterungsbeständige Ein- und Zweischichtlackierungen.

Die Härtung der erfindungsgemäßen Lacke erfolgt je nach der Anwendung in einem Temperaturbereich von 130 bis 350 °C, vorzugsweise zwischen 140 und 300 °C, in einer Zeit von 30 Minuten bis 30 Sekunden. Die Lackfilme weisen hervorragende lacktechnische Eigenschaften, insbesondere hohe Flexibilität und Witterungsstabilität auf.

## Experimenteller Teil

### A Herstellung der partiell blockierten Polyisocyanate

Allgemeine Herstellungsvorschrift

Zu 5 bis 20 Mol Polyisocyanat wird bei 70 bis 80 °C unter Rühren portionsweise 1 Mol Blockierungsmittel zugegeben. Nach beendeter Blockierungsmittelzugabe wird das Reaktionsgemisch noch eine Stunde bei 100 °C erhitzt und anschließend das nicht umgesetzte Polyisocyanat mittels Dünnschichtdestillation bei

90 bis 140 °C und 0,0133 mbar entfernt. Vom Reaktionsprodukt (= Rückstand) wurden die chemischen und physikalischen Kenndaten in der folgenden Tabelle zusammengefaßt:

Partiell blockierte Polyisocyanate

| Beispiel A | Ausgangsstoffe Polyiso-cyanat | Blockie-rungsm. | NCO-Gehalt in Gew.-% frei | gesamt | Polyisocyanat monomer Gew.-% | Viskosität in mPa·s bei °C 25 | 30 | 40 | 50 | 70 |
|---|---|---|---|---|---|---|---|---|---|---|
| 1 | IPDI | Caprol. | 12 | 24,4 | 0,5 | 975000 | 342000 | 16500 | 10500 | 820 |
| 2 | IPDI | Caprol. | 11,6 | 24,7 | 1,1 | 1250000 | 410000 | 63500 | 13700 | 1250 |
| 3 | IPDI | Caprol. | 11,5 | 24,5 | 2,2 | 1145000 | 397000 | 61250 | 12530 | 1070 |
| 4 | IPDI | MEK-ox. | 12,8 | 26,5 | 2,8 | 571000 | 152000 | 27500 | 5500 | 420 |
| 5 | HDI | Caprol. | 15,3 | 29,4 | 0,5 | 100 | 80 | 50 | 30 | <30 |
| 6 | HDI | MEK-ox. | 15,8 | 32,4 | 2,5 | 70 | 60 | 50 | 30 | <30 |
| 7 | DI51 | Caprol. | 14,8 | 29,3 | 0,7 | 160 | 120 | 60 | 45 | <30 |
| 8 | DI51 | MEK-ox. | 15,7 | 31,5 | 0,8 | 190 | 150 | 80 | 60 | 30 |

Für die Herstellung der Einkomponenten-PUR-Einbrennlacke wurden die partiell blockierten Polyisocyanate in folgenden Lacklösemittelkombinationen gelöst und die Auslaufzeit der 60 %igen Lösungen im DIN-4-Becher bestimmt. Sie lagen zwischen 7 und 23 Sekunden:

a) n-Butylacetat/Xylol = 1 : 3
b) EGA/SOLVESSO$^R$ 100 = 1 : 2
c) EGA/SOLVESSO$^R$ 150 = 1 : 2
d) EGA/Xylol/SOLVESSO$^R$ 100 = 1 : 1 : 1
e) MOP-A/SOLVESSO$^R$ 100 = 1 : 2
f) MOP-A/SOLVESSO$^R$ 150 = 1 : 2
g) MOP-A/Xylol-SOLVESSO$^R$ 100 = 1 : 1 :

B Polyolkomponente

Beispiel 1

7 Mol (1 162 Gew.-T.) Isophthalsäure, 2 Mol (268 Gew.-T.) Trimethylolpropan, 4 Mol (472 Gew.-T.) Hexandiol-1.6 und 2 Mol (320 Gew.-T.) 2.2.4(2.4.4)-Trimethylhexandiol-1.6 wurden in einem 4-l-Glaskolben zur Veresterung gebracht. Als Veresterungskatalysatoren wurden 0,05 Gew.-% Di-n-butylzinnoxid verwendet. Bei ca. 150 °C kam es zur ersten Wasserabspaltung. Innerhalb von 6 bis 8 Stunden wurde die Temperatur auf 220 °C erhöht. Die Veresterung wurde innerhalb 6 Stunden zu Ende geführt. Der Polyester wurde danach auf 200 °C abgekühlt und durch Anlegen von Vakuum (15 bis 30 Torr) innerhalb von 30 bis 45 Minuten weitgehend von flüchtigen Anteilen befreit. Während der gesamten Reaktion wurde ein schwacher $N_2$-Strom durch das Reaktionsgemisch geleitet.

Physikalische und chemische Kenndaten:

| | |
|---|---|
| OH-Zahl | 100 - 110 mg KOH/g |
| Säurezahl | $^<$2 mg KOH/g |
| Glasumwandlungstemperatur (DTA) | +1 bis +8 °C |

Die Auslaufzeit, bestimmt mit dem DIN-4-Becher bei 20 °C der 60 Gew.-%igen Lösung:

| | | |
|---|---|---|
| a) n-Butylacetat/Xylol | 1 : 3 | 300 sec |
| b) EGA/SOLVESSO$^R$ 100 | 1 : 2 | 335 sec |
| c) EGA/SOLVESSO$^R$ 150 | 1 : 2 | 740 sec |
| d) EGA/Xylol/SOLVESSO$^R$ 100 | 1 : 1 : 1 | 395 sec |
| e) MOP-A/SOLVESSO$^R$ 100 | 1 : 2 | 459 sec |
| f) MOP-A/SOLVESSO$^R$ 150 | 1 : 2 | 850 sec |
| g) MOP-A/Xylol/SOLVESSO$^R$ 100 | 1 : 1 : 1 | 430 sec |

Beispiel 2

7 Mol (1 162 Gew.-T.) Isophthalsäure, 2 Mol (268 Gew.-T.) Trimethylolpropan und 6 Mol (708 Gew.-T.) Hexandiol wurden gemäß Beispiel B 1 bis zu einer Säurezahl von $^<$ 2 mg KOH/g verestert.

Physikalische und chemische Kenndaten:

| | |
|---|---|
| OH-Zahl: | 100 - 110 mg KOH/g |
| Säurezahl: | $^<$2 mg KOH/g |
| Glasumwandlungstemperatur (DTA): | +4 bis +12 °C |

Die Auslaufzeit, bestimmt mit dem DIN-4-Becher bei 20 °C der 60 Gew.-%igen Lösung:

a) 525 sec
b) 580 sec
c) 1 133 sec
d) 645 sec
e) 705 sec
f) 1 251 sec
g) 595 sec

Beispiel 3

7 Mol ( 1 162 Gew.-T.) Isophthalsäure, 2 Mol (268 Gew.-T.) Trimethylolpropan, 4 Mol (472 Gew.-T.) Hexandiol-1.6 und 2 Mol (408 Gew.T.) Hydroxypivalinsäureneopentylglykolester wurden gemäß Beispiel B 1 bis zu einer Säurezahl von $^<$ 2 mg KOH/g verestert.

Physikalische und chemischen Kenndaten:

| | |
|---|---|
| OH-Zahl: | 90 - 106 mg KOH/g |
| Säurezahl: | < 2 mg KOH/g |
| Glasumwandlungstemperatur (DTA): | 0 bis +10 °C |

Die Auslaufzeit, bestimmt mit dem DIN-4-Becher bei 20 °C der 60 Gew.-%igen Lösung:
a) 219 sec
b) 350 sec
c) 652 sec
d) 401 sec
e) 464 sec
f) 712 sec
g) 457 sec

Beispiel 4

7 Mol (1 162 Gew.-T.) Isophthalsäure, 2 Mol (268 Gew.-T.) Trimethylolpropan, 3 Mol (354 Gew.-T.) Hexandiol-1.6 und 3 Mol (612 Gew.-T.) Hydroxypivalinsäureneopentylglykolester wurden gemäß Beispiel B 1 bis zu einer Säurezahl von < 2 mg KOH/g verestert.

Physikalische und chemischen Kenndaten:

| | |
|---|---|
| OH-Zahl: | 85 bis 102 mg KOH/g |
| Säurezahl: | < 2 mg KOH/g |
| Glasumwandlungstemperatur (DTA): | +2 bis +11 °C |

Die Auslaufzeit, bestimmt mit dem DIN-4-Becher bei 20 °C der 60 Gew.-%igen Lösung:
a) 253 sec
b) 400 sec
c) 751 sec
d) 439 sec
e) 497 sec
f) 864 sec
g) 477 sec

Beispiel 5

7 Mol ( 1 162 Gew.-T.) Isophthalsäure, 2 Mol (268 Gew.-T-) Trimethylolpropan, 5 Mol (590 Gew.-T.) Hexandiol-1.6 und 1 Mol (104 Gew.-T.) Neopentylglykol wurden gemäß Beispiel B 1 bis zu einer Säurezahl < 2 mg KOH/g verestert.

Physikalische und chemische Kenndaten:

| | |
|---|---|
| OH-Zahl: | 100 - 110 mg KOH/g |
| Säurezahl: | < 2 mg KOH/g |
| Glasumwandlungstemperatur (DTA): | +2 bis +12 °C |

Die Auslaufzeit, bestimmt im DIN-4-Becher bei 20 °C der 60 Gew.-%igen Lösung:
a) 597 sec
b) 643 sec
c) 1 205 sec

d) 683 sec
e) 721 sec
f) 1 301 sec
g) 607 sec

Beispiel 6

CAPA 305 - Polycaprolacton der Firma Interox

| | |
|---|---|
| OH-Zahl: | 310 mg KOH/g |
| Säurezahl: | < 0,75 mg KOH/g |
| Glasumwandlungstemperatur (DTA): | -67 bis -60 °C |

Die Auslaufzeit, bestimmt im DIN-4-Becher bei 20 °C der 60 Gew.-%igen Lösung:
a) 17 sec
b) 18 sec
c) 18 sec
d) 18 sec
e) 18 sec
f) 19 sec
g) 18 sec

Beispiel 7

CAPA 316 - Polycaprolacton der Firma Interox:

| | |
|---|---|
| OH-Zahl: | 218 mg KOH/g |
| Säurezahl: | < 1 mg KOH/g |
| Glasumwandlungstemperatur (DTA): | -64 bis -57 °C |

Die Auslaufzeit, bestimmt im DIN-4-Becher bei 20 °C der 60 Gew.-%igen Lösung:
a) 20 sec
b) 22 sec
c) 23 sec
d) 21 sec
e) 22 sec
f) 24 sec
g) 22 sec

C Einkomponenten-PUR-Einbrennlacke

Zur Herstellung der Lack-Stammlösungen wurden die 60 Gew.-%igen partiell blockierten Polyisocyanatlösungen und die 60 Gew.-%igen Polyesterlösungen verwendet.

Allgemeine Herstellungsvorschrift

a) Lack-Stammlösung

Zur Polyesterlösung wurde bei 60 bis 80 °C unter guter Rührung die berechnete Menge - bezogen auf den gesamten NCO-Gehalt - partiell blockierte Polyisocyanatlösung zugesetzt. Nach beendeter Polyisocyanatzugabe wurde bei 80 °C noch so lange weitergerührt, bis der NCO-Gehalt auf Null gesunken war.

b) Pigmentierte Lacklösung

Die gemäß C a hergestellte Lack-Stammlösung wurde mit 7 Gew.-% Lösungsmittelgemisch - entsprechend der Stammlösung - versetzt und anschließend mit Weißpigment ($TiO_2$) und/oder Füllstoff und/oder Farbstoff und einem in der PUR-Chemie üblichen Verlaufmittel und Entschäumer in der Kugelrührwerksmühle abgerieben.

Die Applikation der Klarlacke oder pigmentierten Lacke erfolgte auf entfetteten und/oder vorbehandelten 0,8 bis 1 mm Stahl und/oder Aluminiumblechen; die Aushärtung wurde in einem Labor-Umlufttrockenschrank durchgeführt; die Härtungstemperaturen lagen zwischen 170 und 280 °C; die Schichtdicken der Probefilme lagen zwischen 25 und 30 µm.

Die Abkürzungen in den folgenden Tabellen bedeuten:

| | | |
|---|---|---|
| HK | = Härte nach König (sec) | (DIN 53 157) |
| HB | = Härte nach Buchholz | (DIN 53 153) |
| ET | = Tiefung nach Erichsen (mm) | (DIN 53 156) |
| GS | = Gitterschnittprüfung | (DIN 53 151) |
| GG 20° ∢ und GG 60° ∢ | = Messung des Glanzes nach Gardner | (ASTM-D 523) |
| T-Bend-Test | = gemessen an 0,8 mm starken lackierten Eisenblechen. Hierbei wird das Blech mit der Lackseite nach außen in verschiedenen Krümmungsradien um 180 ° gebogen, wobei sich die Krümmungsradien dadurch ergeben, daß man entweder keine (Meßzahl 0) oder mehrere (Meßzahl > 0) unlackierte Bleche gleicher Stärke als Abstandshalter bei der Biegung verwendet. Die Meßzahl gibt an, unter welchen Bedingungen die Biegung eben noch erfolgen kann, ohne daß bei 10facher Vergrößerung Risse erkennbar sind. (Prüfnorm der European Coil Coating Association) | |

Beispiel 1

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 47,2 Gew.-% | Polyesterlösung gemäß B 1 |
| 15,3 Gew.-% | Vernetzerlösung gemäß A 1 |
| 7,0 Gew.-% | Lösungsmittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 2,25/ 280 | 196 | 125 | 7,9 | 0 | 2 H | 0 | 72 | 91 |
| 3 / 250 | 199 | 125 | 8,0 | 0 | 2 H | 0 | 74 | 89 |
| 7 / 200 | 195 | 125 | 8,0 | 0 | 2 H | 0 | 76 | 88 |
| 10 / 180 | 192 | 111 | 8,0 | 0 | H - 2 H | 0 | 77 | 88 |
| 14 / 170 | 190 | 125 | 8,1 | 0 | 2 H | 0 | 76 | 89 |

Beispiel 2

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 47,8 Gew.-% | Polyesterlösung gemäß B 2 |
| 14,7 Gew.-% | Vernetzerlösung gemäß A 1 |
| 7,0 Gew.-% | Lösungsmittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 2,25/ 280 | 197 | 125 | 7,8 | 0 | 2 H | 0 | 71 | 88 |
| 3 / 250 | 193 | 125 | 8,2 | 0 | 2 H | 0 | 75 | 86 |
| 7 / 200 | 196 | 125 | 8,3 | 0 | 2 H | 0 | 76 | 87 |
| 10 / 180 | 191 | 111 | 8,1 | 0 | 2 H | 0 | 77 | 89 |
| 14 / 170 | 190 | 111 | 8,0 | 0 | 2 H | 0 | 78 | 88 |

Beispiel 3

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 47,3 Gew.-% | Polyesterlösung gemäß B 1 |
| 15,2 Gew.-% | Vernetzerlösung gemäß A 2 |
| 7,0 Gew.-% | Lösungsmittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 2,25/ 280 | 194 | 125 | 7,7 | 0 | 2 H | 0 | 74 | 88 |
| 3 / 250 | 197 | 125 | 7,9 | 0 | 2 H | 0 | 71 | 90 |
| 7 / 200 | 199 | 125 | 8,1 | 0 | 2 H | 0 | 77 | 87 |
| 10 / 180 | 196 | 125 | 8,0 | 0 | 2 H | 0 | 76 | 88 |
| 14 / 170 | 194 | 125 | 7,9 | 0 | 2 H | 0 | 74 | 89 |

Beispiel 4

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 47,2 Gew.-% | Polyesterlösung gemäß B 1 |
| 15,3 Gew.-% | Vernetzerlösung gemäß A 3 |
| 7,0 Gew.-% | Lösungsmittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 2,25/ 280 | 199 | 125 | 8,0 | 0 | 2 H | 0 | 73 | 90 |
| 3 / 250 | 195 | 125 | 7,9 | 0 | 2 H | 0 | 75 | 88 |
| 7 / 200 | 197 | 125 | 8,2 | 0 | 2 H | 0 | 77 | 89 |
| 10 / 180 | 192 | 125 | 8,1 | 0 | 2 H | 0 | 74 | 89 |
| 14 / 170 | 189 | 125 | 8,0 | 0 | 2 H | 0 | 76 | 91 |

Beispiel 5

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 45,8 Gew.-% | Polyesterlösung gemäß B 1 und B 6 (95:5 Gew.-T.) |
| 16,7 Gew.-% | Vernetzerlösung gemäß A 1 |
| 7,0 Gew.-% | Lösungsmittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. | | | | T-Bend- | Bleist. | | GG | |
| min / °C | HK | HB | ET | Test | härte | GS | 20° ⚹ | 60° ⚹ |
| 2,25/ 280 | 189 | 125 | 8,3 | 0 - 1 | 2 H | 0 | 70 | 88 |
| 3 / 250 | 184 | 125 | 8,4 | 0 | 2 H | 0 | 72 | 86 |
| 7 / 200 | 186 | 125 | 8,1 | 0 - 1 | 2 H | 0 | 74 | 89 |
| 10 / 180 | 182 | 125 | 8,3 | 0 - 1 | 2 H | 0 | 72 | 89 |
| 14 / 170 | 184 | 125 | 8,2 | 0 | 2 H | 0 | 74 | 87 |

Beispiel 6

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 45,8 Gew.-% | Polyesterlösung gemäß B 1 und B 7 (90:10 Gew.-T.) |
| 16,7 Gew.-% | Vernetzerlösung gemäß A 1 |
| 7,0 Gew.-% | Lösungsmittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 2,25/ 280 | 190 | 125 | 8,2 | 0 | 2 H | 0 | 70 | 87 |
| 3 / 250 | 192 | 125 | 8,5 | 0 | 2 H | 0 | 72 | 89 |
| 7 / 200 | 189 | 125 | 8,3 | 0 | 2 H | 0 | 71 | 86 |
| 10 / 180 | 188 | 125 | 8,2 | 0 | 2 H | 0 | 73 | 86 |
| 14 / 170 | 189 | 125 | 8,4 | 0 | 2 H | 0 | 72 | 88 |

Beispiel 7

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 46,1 Gew.-% | Polyesterlösung gemäß B 1 und B 7 (90:10 Gew.-T.) |
| 16,4 Gew.-% | Vernetzerlösung gemäß A 3 |
| 7,0 Gew.-% | Lösungsmittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 2,25/ 280 | 187 | 125 | 8,1 | 0 | 2 H | 0 | 72 | 88 |
| 3 / 250 | 190 | 125 | 8,4 | 0 - 1 | 2 H | 0 | 70 | 86 |
| 7 / 200 | 189 | 125 | 8,3 | 0 | 2 H | 0 | 74 | 90 |
| 10 / 180 | 186 | 125 | 8,0 | 0 | 2 H | 0 | 73 | 91 |
| 14 / 170 | 188 | 125 | 8,3 | 0 - 1 | 2 H | 0 | 70 | 88 |

Beispiel 8

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 45,5 Gew.-% | Polyesterlösung gemäß B 1 |
| 19,5 Gew.-% | Vernetzerlösung gemäß A 4 |
| 12,0 Gew.-% | Lösungsmittelgemisch gemäß der eingesetzten Lacklösung |
| 27,9 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° * | 60° * |
| 1 / 280 | 188 | 111 | 7,8 | 0 | 2 H | 0 | 84 | 91 |
| 2 / 250 | 191 | 111 | 8,1 | 0 | 2 H | 0 | 87 | 94 |
| 4 / 200 | 189 | 111 | 8,3 | 0 - 1 | 2 H | 0 | 86 | 93 |
| 8 / 180 | 187 | 111 | 8,0 | 0 | 2 H | 0 | 83 | 92 |
| 12 / 170 | 186 | 111 | 7,9 | 0 | 2 H | 0 | 89 | 94 |

Beispiel 9

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 49,8 Gew.-% | Polyesterlösung gemäß B 3 |
| 12,7 Gew.-% | Vernetzerlösung gemäß A 5 |
| 7,0 Gew.-% | Lösungsmittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° * | 60° * |
| 2,25/ 280 | 168 | 111 | 8,1 | 0 | 2-2 H | 0 | 70 | 86 |
| 3 / 250 | 165 | 111 | 8,3 | 0 | H | 0 | 72 | 86 |
| 7 / 200 | 166 | 111 | 8,0 | 0 | H | 0 | 71 | 87 |
| 10 / 180 | 165 | 111 | 8,1 | 0 | H | 0 | 72 | 86 |
| 14 / 170 | 164 | 111 | 8,2 | 0 | H | 0 | 74 | 89 |

Beispiel 10

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 50,3 Gew.-% | Polyesterlösung gemäß B 4 |
| 12,2 Gew.-% | Vernetzerlösung gemäß A 5 |
| 7,0 Gew.-% | Lösungsmittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 2,25/ 280 | 172 | 111 | 8,2 | 0 | H-2 H | 0 | 72 | 86 |
| 3 / 250 | 177 | 125 | 8,0 | 0 | H | 0 | 71 | 87 |
| 7 / 200 | 175 | 111 | 8,4 | 0 | H-2 H | 0 | 74 | 89 |
| 10 / 180 | 172 | 111 | 8,0 | 0 | H-2 H | 0 | 73 | 88 |
| 14 / 170 | 173 | 111 | 8,3 | 0 | H-2 H | 0 | 75 | 90 |

Beispiel 11

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 61,5 Gew.-% | Polyesterlösung gemäß B 4 |
| 13,5 Gew.-% | Vernetzerlösung gemäß A 6 |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 1 / 280 | 170 | 125 | 8,1 | 0 | 2 H | 0 | 73 | 84 |
| 2 / 250 | 173 | 125 | 8,4 | 0 | 2 H | 0 | 72 | 84 |
| 4 / 200 | 174 | 125 | 8,0 | 0 | H-2 H | 0 | 74 | 86 |
| 8 / 180 | 172 | 125 | 8,0 | 0 | H-2 H | 0 | 75 | 88 |
| 12 / 170 | 171 | 125 | 8,2 | 0 | 2 H | 0 | 73 | 86 |

Beispiel 12

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 47,3 Gew.-% | Polyesterlösung gemäß B 5 |
| 11,7 Gew.-% | Vernetzerlösung gemäß A 6 |
| 12,0 Gew.-% | Lösemittelgemisch gemäß der eingesetzten Lacklösung |
| 27,9 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 1 / 280 | 168 | 111 | 8,0 | 0 | H-2 H | 0 | 74 | 89 |
| 2 / 250 | 166 | 100 | 8,2 | 0 - 1 | H | 0 | 77 | 81 |
| 4 / 200 | 165 | 111 | 8,1 | 0 - 1 | H | 0 | 76 | 88 |
| 8 / 180 | 167 | 111 | 8,1 | 0 | H-2 H | 0 | 75 | 87 |
| 12 / 170 | 166 | 111 | 8,3 | 0 - 1 | H | 0 | 76 | 89 |

Beispiel 13

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 49,7 Gew.-% | Polyesterlösung gemäß B 3 |
| 12,8 Gew.-% | Vernetzerlösung gemäß A 7 |
| 7,0 Gew.-% | Lösemittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° * | GG 60° * |
| 2,25/ 280 | 168 | 100 | 8,4 | 0 | 2 H | 0 | 68 | 85 |
| 3 / 250 | 167 | 111 | 8,3 | 0 | H-2 H | 0 | 70 | 85 |
| 7 / 200 | 166 | 111 | 8,0 | 0 | 2 H | 0 | 74 | 87 |
| 10 / 180 | 165 | 111 | 8,2 | 0 | H-2 H | 0 | 72 | 86 |
| 14 / 170 | 167 | 100 | 8,3 | 0 | 2 H | 0 | 70 | 85 |

Beispiel 14

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 50,2 Gew.-% | Polyesterlösung gemäß B 4 |
| 12,3 Gew.-% | Vernetzerlösung gemäß A 7 |
| 7,0 Gew.-% | Lösemittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° * | GG 60° * |
| 2,25/ 280 | 179 | 111 | 8,4 | 0 | 2 H | 0 | 71 | 88 |
| 3 / 250 | 177 | 125 | 8,3 | 0 | 2 H | 0 | 74 | 90 |
| 7 / 200 | 179 | 111 | 8,3 | 0 | 2 H | 0 | 72 | 87 |
| 10 / 180 | 176 | 111 | 8,4 | 0 | 2 H | 0 | 73 | 88 |
| 14 / 170 | 177 | 111 | 8,2 | 0 | 2 H | 0 | 73 | 90 |

Beispiel 15

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 49,2 Gew.-% | Polyesterlösung gemäß B 5 |
| 13,3 Gew.-% | Vernetzerlösung gemäß A 7 |
| 7,0 Gew.-% | Lösemittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 2,25/ 280 | 167 | 111 | 8,2 | 0 | H-2 H | 0 | 72 | 87 |
| 3 / 250 | 169 | 111 | 8,4 | 0 - 1 | 2 H | 0 | 76 | 89 |
| 7 / 200 | 170 | 100 | 8,1 | 0 | 2 H | 0 | 71 | 88 |
| 10 / 180 | 167 | 100 | 8,2 | 0 | H-2 H | 0 | 77 | 91 |
| 14 / 170 | 168 | 111 | 8,0 | 0 - 1 | 2 H | 0 | 76 | 90 |

Beispiel 16

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 47,6 Gew.-% | Polyesterlösung gemäß B 4 |
| 11,4 Gew.-% | Vernetzerlösung gemäß A 8 |
| 12,0 Gew.-% | Lösemittelgemisch gemäß der eingesetzten Lacklösung |
| 27,9 Gew.-% | Weißpigment ($TiO_2$) |
| 1,0 Gew.-% | Entschäumer |
| 0,1 Gew.-% | Verlaufmittel |

| Härtungs-bedingungen | | | | | | | | | |
|---|---|---|---|---|---|---|---|---|---|
| | Mechanische Kenndaten | | | | | | | | |
| Zeit/Temp. min / °C | HK | HB | ET | T-Bend-Test | Bleist. härte | GS | GG 20° ∢ | GG 60° ∢ |
| 1 / 280 | 184 | 111 | 8,6 | 0 | 2 H | 0 | 72 | 86 |
| 2 / 250 | 182 | 125 | 8,3 | 0 - 1 | 2 H | 0 | 74 | 86 |
| 4 / 200 | 186 | 111 | 8,5 | 0 | 2 H | 0 | 80 | 89 |
| 8 / 180 | 180 | 111 | 8,4 | 0 - 1 | 2 H | 0 | 80 | 90 |
| 12 / 170 | 181 | 111 | 8,5 | 0 - 1 | 2 H | 0 | 76 | 87 |

Beispiel 17

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 46,9 Gew.-% | Polyesterlösung gemäß B 5 |
| 12,1 Gew.-% | Vernetzerlösung gemäß A 8 |
| 12,0 Gew.-% | Lösemittelgemisch gemäß der eingesetzten Lacklösung |
| 27,9 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 1 / 280 | 169 | 100 | 8,0 | 0 - 1 | H | 0 | 74 | 88 |
| 2 / 250 | 171 | 111 | 8,3 | 0 | H-2 H | 0 | 72 | 87 |
| 4 / 200 | 168 | 100 | 8,1 | 0 - 1 | H | 0 | 75 | 90 |
| 8 / 180 | 167 | 100 | 8,0 | 0 - 1 | H | 0 | 74 | 89 |
| 12 / 170 | 168 | 100 | 8,2 | 0 | H | 0 | 76 | 91 |

Beispiel 18

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 48,3 Gew.-% | Polyesterlösung gemäß B 1 |
| 14,2 Gew.-% | Vernetzerlösung gemäß A 1 |
| 7,0 Gew.-% | Lösemittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 2,25/ 280 | 190 | 125 | 7,9 | 1 | 2 H | 0 | 70 | 86 |
| 3 / 250 | 189 | 125 | 8,2 | 0 - 1 | 2 H | 0 | 68 | 86 |
| 7 / 200 | 193 | 125 | 7,8 | 1 | 2 H-3 H | 0 | 72 | 87 |
| 10 / 180 | 193 | 125 | 7,7 | 0 - 1 | 2 H | 0 | 71 | 88 |
| 14 / 170 | 197 | 125 | 7,8 | 1 - 2 | 2 H | 0 | 69 | 87 |

Beispiel 19

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 49,5 Gew.-% | Polyesterlösung gemäß B 1 |
| 13,0 Gew.-% | Vernetzerlösung gemäß A 1 |
| 7,0 Gew.-% | Lösemittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungs-bedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 2,25/ 280 | 183 | 125 | 8,2 | 0 - 1 | 2 H | 0 | 66 | 82 |
| 3 / 250 | 184 | 125 | 8,2 | 0 | 2 H | 0 | 67 | 84 |
| 7 / 200 | 186 | 125 | 8,0 | 0 - 1 | 2 H | 0 | 65 | 87 |
| 10 / 180 | 185 | 125 | 7,9 | 0 - 1 | 2 H | 0 | 63 | 86 |
| 14 / 170 | 182 | 125 | 8,0 | 0 - 1 | 2 H | 0 | 64 | 89 |

Beispiel 20

Nach der Herstellung der Lack-Stammlösung gemäß C 1 und anschließender Pigmentierung gemäß C 2 erfolgte die Applikation sowie die Aushärtung des Lackes zwischen 170 und 280 °C.

Rezeptur:

| | |
|---|---|
| 52,2 Gew.-% | Polyesterlösung gemäß B 1 |
| 10,3 Gew.-% | Vernetzerlösung gemäß A 1 |
| 7,0 Gew.-% | Lösemittelgemisch gemäß der eingesetzten Lacklösung |
| 29,4 Gew.-% | Weißpigment ($TiO_2$) |
| 1,0 Gew.-% | Entschäumer |
| 0,1 Gew.-% | Verlaufmittel |

| Härtungsbedingungen | Mechanische Kenndaten | | | | | | | |
|---|---|---|---|---|---|---|---|---|
| Zeit/Temp. min / °C | HK | HB | ET | T-Bend-Test | Bleist. härte | GS | GG 20° ∢ | GG 60° ∢ |
| 2,25/ 280 | 184 | 125 | 8,2 | 1 | 2 H | 0 | 62 | 85 |
| 3 / 250 | 182 | 125 | 8,4 | 1 - 2 | 2 H | 0 | 64 | 85 |
| 7 / 200 | 182 | 125 | 8,2 | 1 | 2 H | 0 | 70 | 88 |
| 10 / 180 | 184 | 125 | 8,1 | 1 | 2 H | 0 | 64 | 85 |
| 14 / 170 | 181 | 125 | 8,0 | 1 | 2 H | 0 | 67 | 86 |

D Vergleichsbeispiele

I Allgemeine Herstellungsvorschrift (Partiell blockierte Polyisocyanate ohne Dünnschichtdestillation)

Zu einem Mol Polyisocyanat wird bei 90 bis 110 °C ein Mol Blockierungsmittel so zugegeben, daß die Temperatur des Reaktionsgemisches nicht über 120 °C ansteigt. Nach beendeter Blockierungsmittelzugabe wird noch so lange erhitzt, bis der NCO-Gehalt des Reaktionsgemisches den berechneten Wert erreicht hat. Die chemischen und physikalischen Kenndaten der Reaktionsprodukte sind in der folgenden Tabelle zusammengefaßt:

| Beispiel D I | Polyiso-cyanat | Blockie-rungsm. | NCO-Gehalt in Gew.-% | | Polyisocyanat monomer | Viskosität in mPa·s bei °C | | | | |
|---|---|---|---|---|---|---|---|---|---|---|
| | | | frei | gesamt | Gew.-% | 25 | 30 | 40 | 50 | 70 |
| 1 | IPDI | Caprol. | 12,4 | 24,85 | 15,8 | 381000 | 142000 | 27800 | 6650 | 690 |
| 2 | IPDI | MEK-ox. | 12,4 | 26,0 | 15,3 | 27000 | 14750 | 3390 | 1100 | 195 |
| 3 | HDI | Caprol. | 14,7 | 29,75 | 14,5 | 90 | 70 | 60 | 40 | <30 |
| 4 | HDI | MEK-ox. | 16,4 | 31,5 | 14,5 | 75 | 55 | 35 | 30 | <30 |
| 5 | DI51 | Caprol. | 14,5 | 29,0 | 14,3 | 190 | 140 | 70 | 40 | <30 |
| 6 | DI51 | MEK-ox. | 16,2 | 31,7 | 17,7 | 110 | 85 | 45 | 30 | <30 |
| 7 | HMDI | Caprol. | 10,9 | 21,9 | 17,0 | 880000 | 300000 | 60000 | 9000 | 110 |

Für die Herstellung der Einkomponenten-PUR-Einbrennlacke wurden die partiell blockierten Polyisocyanate gemäß A in den Acklösemittelkombinationen gelöst und die Auslaufzeit der 60 %igen Lösungen im DIN-4-Becher bestimmt. Sie lagen zwischen 6 und 25 Sekunden.

D II Lack-Vergleichsbeispiele

Die Einkomponenten-PUR-Einbrennlacke, hergestellt aus den Polyisocyanaten gemäß D I und den hydroxylgruppenhaltigen Polyestern gemäß B, entsprechen nicht dem Stand der Technik. Zum einen

bedingt die hohe Viskosität der Lack-Stammlösungen für die Applikation große Mengen Lösemittel (Umweltbelastung) und zum anderen kann durch die hohe Vorvernetzung - hervorgerufen durch den hohen Monomergehalt der eingesetzten, nicht gedünnschichteten Polyisocyanate - Gelbildung nicht verhindert werden, was auf die Lackqualität (Verlauf) einen erheblichen negativen Einfluß ausübt.

**Patentansprüche**

1. Verfahren zur Herstellung von Einkomponenten-PUR-Einbrennlacken auf der Basis von hydroxylgruppenhaltigen Polyoxyverbindungen und Polyisocyanataddukten sowie üblichen Zuschlagstoffen in lacküblichen Lösemitteln,
dadurch gekennzeichnet,
daß
A halbblockierte aliphatische und/oder (cyclo)aliphatische Polyisocyanate mit
B hydroxylgruppenhaltigen Polyoxyverbindungen mit mehr als zwei OH-Gruppen im Molekül
umgesetzt werden, wobei das halbblockierte Polyisocyanat durch Zugabe des Blockierungsmittels zu der 5- bis 20fach molaren Menge an Polyisocyanat erhalten wurde, das Polyisocyanat einen Siedepunkt im Vakuum unterhalb der Deblockierungstemperatur des Blockierungsmittels besitzt, das halbblockierte Polyisocyanat weitgehend mittels Dünnschichtdestillation vom monomeren unblockierten Polyisocyanat befreit wurde und der Anteil an monomerem unblockiertem Polyisocyanat bis $\leqq$ 3,5 Gew.-% betragen kann.

2. Verfahren nach Anspruch 1,
dadurch gekennzeichnet,
daß als Diisocyanate Hexamethylendiisocyanat-1.6, 2-Methylpentandiisocyanat-1.5 und 2.2.4(2.4.4)-Trimethylhexamethylendiisocyanat-1.6 eingesetzt werden.

3. Verfahren nach Anspruch 1,
dadurch gekennzeichnet,
daß als Diisocyanat 3-Isocyanatomethyl-3.5.5-trimethylcyclohexylisocyanat eingesetzt wird.

4. Verfahren nach den Ansprüchen 1 bis 3,
dadurch gekennzeichnet,
daß die hydroxylgruppenhaltigen Polyoxyverbindungen gesättigte Polyester sind auf der Basis von aliphatischen und/oder aromatischen Polycarbonsäuren, Diolen und Triolen mit Hydroxylzahlen von 50 bis 400 mg KOH/g und Molekulargewichten von 400 bis 4 500 und einer Glasumwandlungstemperatur unterhalb +20 °C.

5. Verfahren nach Anspruch 4,
dadurch gekennzeichnet,
daß die Hydroxylzahlen des Polyester 80 bis 330 mg KOH/g und die Molekulargewichte 500 bis 2 500 betragen.

6. Verfahren nach den Ansprüchen 1 bis 5,
dadurch gekennzeichnet,
daß das NCO/OH-Verhältnis von 0,6 bis 1,2 : 1 beträgt.

7. Verfahren nach Anspruch 6,
dadurch gekennzeichnet,
daß das NCO/OH-Verhältnis 0,8 bis 1,1 : 1 beträgt.

8. Verfahren nach Anspruch 6,
dadurch gekennzeichnet,
daß das NCO/OH-Verhältnis 1 : 1 beträgt.

9. Verfahren nach den Ansprüchen 1 bis 8,
dadurch gekennzeichnet,
daß das Bindemittelgemisch zu 50 bis 90 Gew.-% aus hydroxylgruppenhaltigem Polyester und 50 bis 10 Gew.-% aus dem halbblockierten Polyisocyanat besteht.

**10.** Verfahren nach den Ansprüchen 1 bis 9,
dadurch gekennzeichnet,
daß man die in der PUR-Chemie üblichen Katalysatoren in Mengen von 0,05 bis 1,5 Gew.-% mit einsetzen kann.

**11.** Verfahren nach den Ansprüchen 1 bis 10,
dadurch gekennzeichnet,
daß auch Pigmente und/oder Füllstoffe in Mengen bis zu 50 Gew.-% eingesetzt werden.

## Claims

**1.** A method for the manufacture of single component PUR stove enamels based on hydroxylgroup-containing polyoxy compounds and polyisocyanate adducts as well as additives customarily employed in conventional enamel solvents, characterized in that

A half-blocked aliphatic and/or (cyclo)aliphatic polyisocyanates are reacted with

B hydroxylgroup-containing polyoxy compounds comprising more than two OH-groups per molecule,

where the half-blocked polyisocyanate is obtained by the addition of the blocking agent to a 5 to 20-fold molar amount of the polyisocyanate, the polyisocyanate has a boiling point under vacuum which is less than the deblocking temperature of the blocking agent, the half-blocked polyisocyanate is substantially freed from monomeric unblocked polyisocyanate by thin-film distillation and the monomeric unblocked polyisocyanate fraction can be ≦ 3.5% by weight.

**2.** A method according to claim 1, characterized in that hexamethylene-1,6,-diisocyanate, 2-methylpentane-1,5-diisocyanate and 2,2,4(2,4,4)-trimethylhexamethylene-1,6,-diisocyanate are employed as diisocyanates.

**3.** A method according to claim 1, characterized in that 3-isocyanatomethyl-3,5,5-trimethylcyclohexylisocyanate is employed as diisocyanate.

**4.** A method according to claims 1 to 3, characterized in that the hydroxylgroup-containing polyoxy compounds are saturated polyesters produced from aliphatic and/or aromatic polycarboxylic acids and diols or triols and have hydroxyl numbers of 50 to 400 mg KOH/g, molecular weights between 400 and 4,500 and a brittle temperature below +20 °C.

**5.** A method according to claim 4, characterized in that the hydroxyl numbers of the polyesters are 80 to 330 mg KOH/g and the molecular weights are between 500 and 2,500.

**6.** A method according to claims 1 to 5, characterized in that the NCO/OH ratio is 0.6 to 1.2 : 1.

**7.** A method according to claim 6, characterized in that the NCO/OH ratio is 0.8 to 1.1 : 1.

**8.** A method according to claim 6, characterized in that the NCO/OH ratio is 1 : 1.

**9.** A method according to claims 1 to 8, characterized in that the binding medium mixture consists of 50 to 90% by weight of hydroxylgroup-containing polyester and 50 to 10% by weight of the half-blocked polyisocyanate.

**10.** A method according to claims 1 to 9, characterized in that catalysts conventionally used in PUR chemistry can be added in amounts of 0.05 to 1.5% by weight.

**11.** A method according to claims 1 to 10, characterized in that pigments and/or fillers are added in amounts up to 50% by weight.

## Revendications

**1.** Procédé de fabrication de laques de cuisson PUR à un seul composant à base de composés polyoxylés renfermant des groupes hydroxylés et d'adducts de polyisocyanates ainsi que des substances fondantes habituelles, dans les solvants usuels dans les laques, caractérisé en ce que l'on fait

réagir

A - des polyisocyanates à demi-bloqués aliphatiques et/ou (cyclo) aliphatiques

B - avec des composés polyoxydes renfermant des groupes hydroxyle avec plus de deux groupes OH dans la molécule

dans lequel le polyisocyanate à demi-bloqué a été obtenu par addition d'agent de blocage à une quantité 5 à 20 fois molaire de polyisocyanate que le polyisocyanate possède un point d'ébullition sous vide endessous de la température de déblocage de l'agent de blocage, que le polyisocyanate à demi-bloqué a été débarrassé largement par distillation en couche mince du polyisocyanate monomérique non bloqué et que la fraction en polyisocyanate monomérique non bloqué peut s'élever jusqu'à ≦ 3,5 % en poids.

**2.** Procédé selon la revendication 1, caractérisé en ce que comme di-isocyanate, l'hexamethylène di-isocyanate-1.6, 2-méthylpentane di-isocyanate-1.5 et le 2.2.4(2.4.4)-Trimethylhexaméthylène di-isocyanate-1.6 sont mis en oeuvre.

**3.** Procédé selon la revendication 1, caractérisé en ce que comme di-isocyanate le 3-isocyanatométhyl-3.5.5-triméthylcyclohexyle isocyanate est mis en oeuvre.

**4.** Procédé selon les revendications 1 à 3, caractérisé en ce que les composés polyoxylés renfermant des groupes hydroxyle sont des polyesters saturés à base d'acide polycarboxyliques aliphatiques et/ou aromatiques, des diols et des Triols avec des indices d'hydroxyle allant de 50 à 400 mg KOH/g et des poids moléculaires allant de 400 à 4500 et une température de transition vitreuse en-dessous de + 20 ° C.

**5.** Procédé selon la revendication 4, caractérisé en ce que les indices d'hydroxyle du polyester s'élèvent de 80 à 330 mg KOH/g et les poids moléculaires s'échelonnent de 500 à 2500.

**6.** Procédé selon les revendications 1 à 5, caractérisé en ce que le rapport NCO/OH s'élève de 0,6 à 1,2 : 1.

**7.** Procédé selon la revendication 6, caractérisé en ce que le rapport NCO/OH s'élève de 0,8 à 1,1 : 1.

**8.** Procédé selon la revendication 6, caractérisé en ce que le rapport NCO/OH s'élève à 1 : 1.

**9.** Procédé selon les revendications 1 à 8, caractérisé en ce que le mélange d'agents de liaison consiste jusqu'à 50 à 90 % en poids en polyester renfermant des groupes hydroxyle et pour 50 à 10 % en poids en polyisocyanate bloqué à moitié.

**10.** Procédé selon les revendications 1 à 9, caractérisé en ce que l'on peut mettre en oeuvre les catalyseurs habituels dans la chimie des PUR en quantités allant de 0,05 à 1,5 % en poids.

**11.** Procédé selon les revendications 1 à 10, caractérisé en ce qu'également des pigments et/ou des substances de remplissage sont mises en oeuvre en quantités allant jusqu'à 50 % en poids.